# EUROPEAN PATENT SPECIFICATION

(11) **EP 4 405 143 B1**
(45) Date of publication and mention of the grant of the patent: **05.11.2025**
(21) Application number: 22887838.5
(22) Date of filing: 13.09.2022
(51) Int. Cl.: B23D 45/02, B23D 47/04, B23D 59/00, B23Q 11/06, B23Q 11/08, B26D 1/18, B26D 7/01, B26D 7/02, B26D 7/22, B28D 7/02, G01N 1/04

(54) **SAMPLE CUTTING MACHINE FOR GRP PIPES**
PROBENSCHNEIDMASCHINE FÜR GFK-ROHRE
MACHINE DE COUPE D'ÉCHANTILLON POUR DES TUYAUX EN PRV

(30) Priority: 26.10.2021 TR 202116708
(43) Date of publication of application: 31.07.2024
(73) Proprietor: Subor Boru Sanayi ve Ticaret Anonim Sirketi, 34718 Kadiköy, Istanbul (TR)
(72) Inventor: CÖMERT, Cihan, 54430 Karapürçek/Sakarya (TR); ARDA, Cihat, 54430 Karapürçek/Sakarya (TR)
(74) Representative: Yamankaradeniz, Kemal
(86) International application number: PCT/TR2022/050980
(87) International publication number: WO 2023/075727

(56) References cited:
- CN-A- 110 682 345
- CN-U- 208 614 880
- CN-U- 209 240 134
- CN-U- 209 240 134
- CN-U- 212 887 871
- DE-A1- 2 909 128
- DE-U1- 9 015 096
- FR-A1- 2 655 733
- JP-A- 2021 115 670
- US-A- 2 216 989
- US-A- 4 098 310
- US-A1- 2016 178 432

## Description

### Technical Field

The present invention relates to systems that allow cutting a ring-shaped piece along approximately 30 cm to be used in test processes after the production of GRP pipes that allow cutting small pieces so as to perform longitudinal tensile, circle tensile etc. tests.

In particular, the present invention relates to sample pipe cutting machine, which can cut samples automatically with the cutting blade.

### State of the Art

Today, after the production of GRP pipes used in areas such as sewerage, a ring-shaped piece along approximately 30 cm is cut to be used in test processes. Small pieces are cut so as to perform longitudinal tensile, circle tensile etc. tests.

In the prior art, the pipe is cut with a stone cutter machine manually for tensile tests. Employees are exposed to heavy dust during cutting with a hand machine. This negatively affects the health of the person.

In the state of the art, while cutting with a stone cutter machine, occupational accidents such as stone explosion, pipe piece thrown out, stone contacting the body etc. are observed.

In the state of the art, the cutting process with a stone cutter machine takes a long time. The number of samples cutting operations per unit time is small. This increases the labor spent for sample cutting.

In the state of the art, the sample can be cut in wrong sizes due to worker error in the cutting process with a stone cutter machine. This causes both wastage of the part and increased labor.

As a result of the research made in the literature, various structures are encountered regarding pipe cutting systems. One of them is the patent application numbered TR2012/10109 with the title "Pipe cutting device". In the summary of the invention whose classification class is B23D 21/04, the following statement is included: "The present invention relates to a pipe cutting device comprising a machine base with a first machine table slidably movable to move with a pipe during extrusion. The assembly includes a machine stand that rotatably supports a base pipe positioned to allow a pipe to pass through a base pipe. A pipe clamping assembly is aligned with and to one side of the base pipe to clamp the pipe during a pipe cutting process. A rotatable drive for the base pipe rotates the base pipe about a longitudinal axis thereof. At least one cutting arrangement is provided. Each cutting assembly includes a mounting bracket attached to the base pipe in a circumferential position, a pivot shaft connecting the support arm to the mounting bracket, and a support arm with a secured drive gear on the pivot shaft."

Another example of the abovementioned structure is the patent with the application number TR2011/01050 titled as "Profile and pipe cutting machine with mobile hydraulic clamp system." In the summary of the invention with classification class B23G 11/00, the following statement is included: "The present invention relates to profile and pipe cutting machine with hydraulic clamp system used for cutting iron profiles and pipes in machinery and manufacturing industry. The clamp systems in the existing machines work as fixed to the machine table and the clamping system of the clamp works manually (with the help of hand) or pneumatically (with the air device). Cutting of large diameter and size cutting section cannot be completed and when it is desired to connect a larger diameter saw, vibration in the saw and anti-blocking occur in the clamp and the saw is broken, causing accidents. In order to overcome these disadvantages mentioned above and fix it in the desired position, the mobile hydraulic clamp system is configured on the machine." CN209240134U numbered document relates to a glass fiber reinforced plastic rod cutting device with a clamping system, but that is not placed under the machine stand, unlike for the present invention.

Another encountered document is FR2655733A1. This invention relates to a device for cutting the material into slices, but it does not comprise a water spraying system and different safety embodiments.

Another encountered document is DE2909128A1. This invention relates to cutting machine that ensure cuts sample of workpieces, but it does a water spraying system and different safety embodiments.

In these applications, the pipe to be cut is fixed in a certain place and the cutting is done manually activating the blade mechanism. There is no dust prevention mechanism during this process. Therefore, these applications can be referred as an example to some disadvantages mentioned above.

As a result; parallel to the developing technology in the sample cutting machine, developments are made, therefore new configurations are required in order to eliminate abovementioned disadvantages and bring solution to current systems.

### Aim of the Invention

The invention is related to sample cutting machine which is different from the structures used in the state of the art, is developed to solve said disadvantages and brings some additional advantages.

The aim of the present invention is to ensure that GRP pipe samples are cut by machine without touching. In this way, the risks of work accidents will be minimized.

Another aim of the invention is to prevent dust formation by spraying water on the cutting area during cutting. In this way, the operator standing at the machine will be able to work without being affected by dust.

Another aim of the invention is to ensure that the cutting motor is automatically lowered up and down on the motion slide since the cutting blade that performs the cutting process is connected to the cutting motor. In this way, the cutting process will be done automatically. The movements of the cutting motor are limited with the help of the safety switches located at the top and bottom.

Another aim of the invention is to prevent unintentional contacts and prevent work accidents that may occur by using front and rear protection covers of the cutting blade that will perform the cutting process.

The structural and characteristic features of the present invention will be understood clearly by the following drawings and the detailed description made with reference to these drawings. Therefore the evaluation shall be made by taking these figures and the detailed description into consideration.

### Brief Description of the Figures

Figure - 1 is a perspective view of the inventive pipe cutting machine from the front left.
Figure - 2 is a perspective view of the inventive pipe cutting machine from the front tight.
Figure - 3 shows the perspective view of the sample compression system, which provides the compression of the sample pipe in the inventive pipe cutting machine.

### Reference Numbers

**1.** Sample pipe cutting machine
**10.** Main body
   **11.** Cutting unit drive element
**20.** Cutting unit
   **21.** Cutting motor
   **22.** Cutting blade
   **23.** Telescopic front housing cover
   **24.** Motion slide
   **25.** Upper safety switch
   **26.** Lower safety switch
   **27.** Fixed housing cover
   **28.** Water spraying system
**30.** Side housing cover
   **31.** Side housing cover safety switch
**40.** Sample pipe
**50.** Sample clamping system
   **51.** Movement arm
   **52.** Moving jaw
   **53.** Fixed jaw
**60.** Control panel
**70.** Upper sample clamping system
**80.** Machine stand

### Detailed Description of an Embodiment of the Invention

In this detailed description, the preferred embodiments of the inventive sample pipe cutting machine (1) is described only for clarifying the subject matter in a manner such that no limiting effect is created.

### Structure principle:

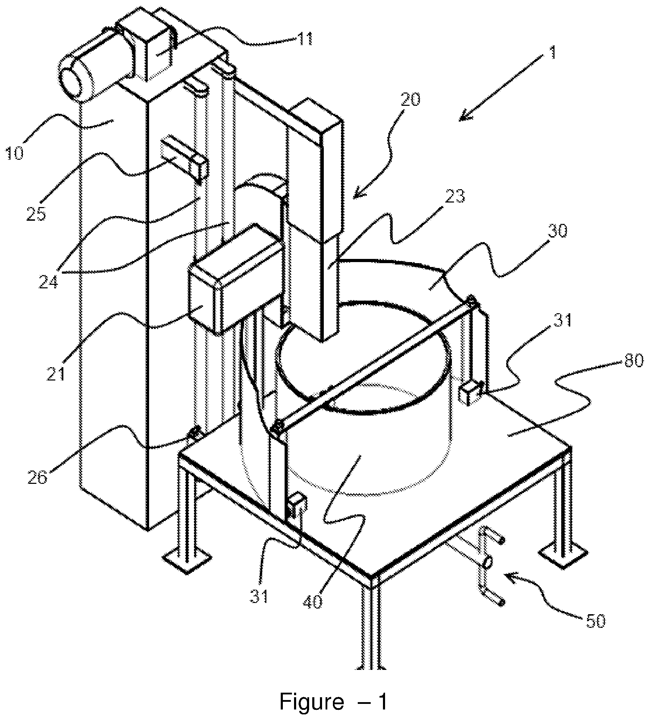

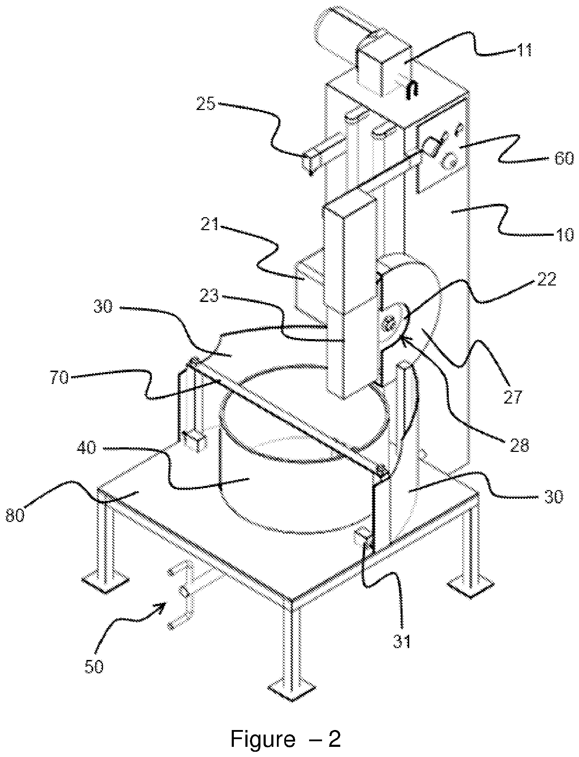

Said sample pipe cutting machine (1) comprises main body (10), cutting unit (20), side housing cover (30), sample pipe (40), sample compression system (50), control panel (60), upper sample compression system (70), machine stand (80). Figures 1 and 2 show the perspective view of the sample pipe cutting machine (1).

The main body (10) is the vertical structure that carries the cutting unit (20) and the control panel (60) thereon. The cutting unit drive element (11) is located on its upper part. The cutting unit drive element (11) provides the up and down movement of the cutting unit (20).

Said cutting unit (20) is the structure that enables the sample pipe (40) to be cut. Cutting unit (20) comprises: cutting motor (21), cutting blade (22), telescopic front housing cover (23), motion slide (24), upper safety switch (25), lower safety switch (26), fixed housing cover (27) and water spraying system (28).

Telescopic front housing cover (23) keeps the blade in the enclosure to prevent work accidents when the cutting blade (22) is operating. It performs the up and down movement of the cutting motor (21) on the motion slide (24). This movement of the cutting motor (21) on the motion slide (24) is provided by the cutting motor drive element (11). The up and down movements of the cutting motor are also limited by the upper safety switch (25) and the lower safety switch (26).

The fixed housing cover (27) fitted around said cutting blade (22) is used to prevent the risks of work accidents arising from the blade by preventing contact with the cutting blade. A water spraying system (28), which is positioned inside the fixed housing cover (27), is used in order to prevent the flying of pipe dust that occurs during the cutting process. During cutting, water is sprayed from the nozzles in the water spraying system (28).

Approximately 30 cm high GRP sample pipe (40) is positioned on the machine stand (80) and cut. In order to prevent work accidents that may occur during cutting, the side housing cover (30) is positioned around the place where the sample pipe (40) will be located. Cutting is done while the side housing cover (30) is closed. Side housing cover safety switch (31) detects whether the cover is open or closed and enables the system to start or stop.

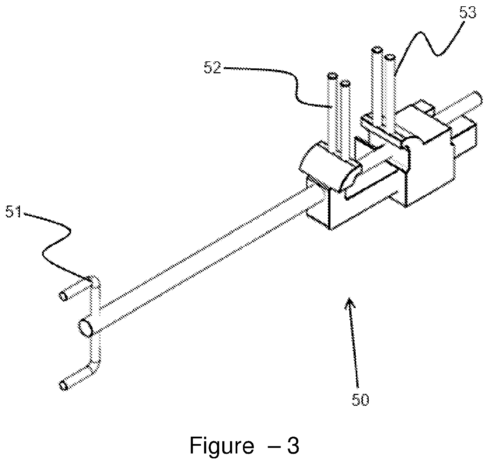

The sample clamping system (50) is used to clamp and fix the sample pipe (40) on the machine stand (80) during the cutting process. Sample clamping system (50) comprises movement arm (51), moving jaw (52) fixed jaw (53). It is seen in perspective in Figure 3. The moving arm (51) moves the movable jaw (52) and enables the jaws to come close to each other and the sample pipe (40) to be clamped.

The control of the motorized components mentioned above is carried out by the control panel (60). The cutting process is carried out automatically without touching by the data entered here. Control panel (60) is shown in Figure 2.

Another factor that prevents the sample pipe (40) from moving during cutting is the sample clamping system (70) from above. As seen in Figures 1 and 2, the clamping system (70) is positioned on top of the sample pipe (40) and clamped, the clamping system (70) prevents the pipe from moving between the machine stand (80) and itself by clamping.

As mentioned above, the sample pipe (40) to be cut is positioned on the machine stand (80). Feet are used so as to keep the machine stand (80) at a certain height from the ground. This height can be adjusted optionally.

### Operating principle;

The sample pipe (40) is placed between the movable jaw (52) and the fixed jaw (53) and placed on the machine stand (80). In order to prevent the movement of the sample at the time of cutting, the movement arm (51) is rotated and the movable jaw (52) moves towards the fixed jaw (53), thus compressing the sample pipe (40) horizontally. After the horizontal fixation, the pipe is fixed in the vertical direction with the help of the sample clamping system (70) from above.

Afterwards, the side housing cover (30) of the cutting machine is closed and the safety switch (31) of the side housing cover is activated. The machine control panel (60) does not receive energy before the safety switch (31) of the side housing cover is activated

After the sample placement process, the cutting motor (21) is operated via the control panel (60). In order to prevent dust formation during the cutting process, the valve of the water spraying system (28) placed on the blade fixed housing cover (27) is opened and water is sprayed onto the blade. The cutting motor (21) descends on the motion slide (24) as motor down button is pressed on the control panel (60).

There are two safety covers on the cutting motor (21). The first one of them is the fixed housing cover (27). The second is the telescopic front cover (23), located in front of the cutting blade (22). Telescopic front housing cover (23) consists of two parts. The first piece is on top and fixed. The second part can go in and out of the first part with the help of the slide system in the first part. It can move up and down with the cutting blade (22) and remains without moving regardless of the movement of the cutting blade (22) at the point where it contacts the sample pipe (40) during the cutting process. Occupational safety risks are minimized by keeping the cutting blade (22) in a completely closed environment when it is not in contact with the sample pipe (40) with the help of the housing covers.

When the cutting blade (22) cuts the sample pipe (40), it contacts the lower safety switch (26) located under the machine stand (80) and automatically stops the downward movement of the cutting motor (21).

The operator takes the cutting motor (21) to its starting position by pressing the motor up button on the control panel (60). When it contacts the upper safety switch (25) on the motion slide (24), the cutting motor (21) automatically stops.

The operator turns off the cutting motor (21) and the water spraying system (28), opens the side housing cover (30) the sample cutting machine, removes the upper sample compression system (70) and finally, loosens the sample clamping system (50) and takes the sample pipe (40) from the machine stand (80).

The new sample pipe (40) is placed on the machine stand (80) and the above processes are repeated for the next cutting process.

## Claims

1. Sample pipe cutting machine (1) for cutting sample pipe (40) for quality control of GRP pipes; **comprising**:
✔ cutting unit (20), which enables said sample pipe (40) to be cut in desired dimensions,
• cutting blade (22), which is located in said cutting unit (20) and cuts the sample pipe (40),
• cutting motor (21), which said cutting blade (22) is connected to and which rotates the cutting blade (22),
• motion slide (24) that enables said cutting motor (21) to move up and down in the vertical direction,
✔ cutting unit drive element (11), which enables said cutting motor (21) to move on the motion slide (24),
✔ machine stand (80) where said sample pipe (40) will be placed in order to be ready for cutting,
✔ sample clamping system (50) which is engaged with the sample pipe (40) placed on the upper part of the machine stand (80) by being placed under said machine stand (80), allows the sample pipe (40) to be fixed on the machine stand (80),
• a movable jaw (52) and a fixed jaw (53) that compose said sample clamping system (50), which ensures that the sample pipe (40) is compressed so that the sample pipe (40) remains without moving,
• a movement arm (51) placed under the machine stand (80) that enables the sample pipe (40) to be compressed by moving said moving jaw (52),
✔ upper sample clamping system (70) provides clamping said sample pipe (40) from the top in order to keep without moving after said sample pipe (40) is placed on the machine stand (80),
✔ control panel (60), which provides automatic control of said moving elements,
✔ main body (10) which carries the cutting unit (20), cutting unit drive element (11) and the control panel (60) thereon.

2. The sample pipe cutting machine (1) according to claim 1, **characterized by comprising** a telescopic front housing cover (23), which is placed on the front of said cutting blade (22) and protects the blade and prevents work accidents.

3. The sample pipe cutting machine (1) according to claim 1, **characterized by comprising** a fixed housing cover (27) that prevents work accident by closing the side and back parts of said cutting blade (22).

4. The sample pipe cutting machine (1) according to claim 3, **characterized by comprising** a water spraying system (28), which is placed inside said fixed housing cover (27) and prevents dust formation by spraying water on the cutting area during cutting.

5. The sample pipe cutting machine (1) according to claim 1, **characterized by comprising** upper safety switch (25), which is attached to the upper part of said main body (10), which the cutting motor (21) will contact when the cutting motor (21) comes out at the top, and thereby enabling the machine to be stopped.

6. The sample pipe cutting machine (1) according to claim 1, **characterized by comprising** lower safety switch (26), which is attached to the lower part of said main body (10), which the cutting motor (21) will contact when the cutting motor (21) goes down to the bottom, thus stopping the cutting and enabling the cutting motor (21) to move up.

7. The sample pipe cutting machine (1) according to claim 1, **characterized by comprising** side housing cover (30) placed on the machine stand (80) in such a way as to surround the sample pipe (40) placed on the said machine stand (80), which closes during cutting and prevents outside intervention.

8. The sample pipe cutting machine (1) according to claim 7, **characterized by comprising** side housing cover safety switch (31) that ensures that the system operates or not by detecting whether said side housing cover (30) is open or closed.

## Patentansprüche

1. Probenrohrschneidmaschine (1) zum Schneiden von Probenrohr (40) zur Qualitätskontrolle von GFK-Rohren; **umfassend:**
√ eine Schneideinheit (20), die es ermöglicht, das Probenrohr (40) in gewünschten Abmessungen zu schneiden,
• ein Schneidblatt (22), das sich in der Schneideinheit (20) befindet und das Probenrohr (40) schneidet,
• einen Schneidmotor (21), mit dem das Schneidblatt (22) verbunden ist und der das Schneidblatt (22) dreht,
• einen Bewegungsschlitten (24), der es dem Schneidmotor (21) ermöglicht, sich in vertikaler Richtung nach oben und nach unten zu bewegen,
√ ein Antriebselement (11) der Schneideinheit, das es dem Schneidmotor (21) ermöglicht, sich auf dem Bewegungsschlitten (24) zu bewegen,
√ einen Maschinenständer (80), an dem das Probenrohr (40) platziert wird, um zum Schneiden bereit zu sein,
√ wobei ein Probenspannsystem (50), das mit dem Probenrohr (40), das auf dem oberen Teil des Maschinenständers (80) platziert ist, in Eingriff gebracht wird, indem es unter dem Maschinenständer (80) platziert wird, erlaubt, dass das Probenrohr (40) auf dem Maschinenständer (80) fixiert wird,
• eine bewegbare Backe (52) und eine feste Backe (53), die das Probenspannsystem (50) bilden, das sicherstellt, dass das Probenrohr (40) komprimiert wird, sodass das Probenrohr (40) unbewegt bleibt,
• einen Bewegungsarm (51), der unter dem Maschinenständer (80) platziert ist und es ermöglicht, dass das Probenrohr (40) durch Bewegen der beweglichen Backe (52) komprimiert wird,
√ wobei ein oberes Probenspannsystem (70) ein Spannen des Probenrohrs (40) von oben bereitstellt, um sich nicht zu bewegen, nachdem das Probenrohr (40) auf dem Maschinenständer (80) platziert wurde,
√ eine Steuertafel (60), die die automatische Steuerung der beweglichen Elemente bereitstellt,
√ einen Hauptkörper (10), der die Schneideinheit (20), das Antriebselement (11) der Schneideinheit und die Steuertafel (60) darauf trägt.

2. Probenrohrschneidmaschine (1) nach Anspruch 1, **gekennzeichnet durch Umfassen** einer teleskopischen vorderen Gehäuseabdeckung (23), die an der Vorderseite des Schneidblatts (22) platziert ist und das Blatt schützt und Arbeitsunfälle verhindert.

3. Probenrohrschneidmaschine (1) nach Anspruch 1, **gekennzeichnet durch Umfassen** einer festen Gehäuseabdeckung (27), die einen Arbeitsunfall durch Verschließen der seitlichen und hinteren Teile des Schneidblatts (22) verhindert.

4. Probenrohrschneidmaschine (1) nach Anspruch 3, **gekennzeichnet durch Umfassen** eines Wassersprühsystems (28), das innerhalb der festen Gehäuseabdeckung (27) platziert ist und Staubbildung durch Sprühen von Wasser auf den Schneidbereich während des Schneidens verhindert.

5. Probenrohrschneidmaschine (1) nach Anspruch 1, **gekennzeichnet durch Umfassen** eines oberen Sicherheitsschalters (25), der an dem oberen Teil des Hauptkörpers (10) angebracht ist, mit dem der Schneidmotor (21) in Kontakt kommt, wenn der Schneidmotor (21) oben herauskommt, und wodurch ermöglicht wird, dass die Maschine angehalten wird.

6. Probenrohrschneidmaschine (1) nach Anspruch 1, **gekennzeichnet durch Umfassen** eines unteren Sicherheitsschalters (26), der an dem unteren Teil des Hauptkörpers (10) angebracht ist, mit dem der Schneidmotor (21) in Kontakt kommt, wenn der Schneidmotor (21) nach unten geht, wodurch das Schneiden gestoppt wird und es ermöglicht wird, dass sich der Schneidmotor (21) nach oben bewegt.

7. Probenrohrschneidmaschine (1) nach Anspruch 1, **gekennzeichnet durch Umfassen** einer seitlichen Gehäuseabdeckung (30), die auf dem Maschinenständer (80) derart platziert ist, dass sie das Probenrohr (40), das auf dem Maschinenständer (80) platziert ist, umgibt, und die sich während des Schneidens schließt und ein Eingreifen von außen verhindert.

8. Probenrohrschneidmaschine (1) nach Anspruch 7, **gekennzeichnet durch Umfassen** eines Sicherheitsschalters (31) für die seitliche Gehäuseabdeckung, der sicherstellt, dass das System funktioniert oder nicht, indem erfasst wird, ob die seitliche Gehäuseabdeckung (30) offen oder geschlossen ist.

## Revendications

1. Machine de coupe de tuyau d'échantillon (1) permettant de couper un tuyau d'échantillon (40) pour le contrôle de qualité des tuyaux en PRV ; **comprenant** :
√ une unité de coupe (20), qui permet de couper ledit tuyau d'échantillon (40) dans les dimensions souhaitées,
• la lame de coupe (22), qui est située dans ladite unité de coupe (20) et coupe le tuyau d'échantillon (40),
• le moteur de coupe (21), auquel ladite lame de coupe (22) est raccordée et qui fait tourner la lame de coupe (22),
• un coulisseau de déplacement (24) qui permet le déplacement de haut en bas dudit moteur de coupe (21) suivant la direction verticale,
√ un élément d'entraînement d'unité de coupe (11), qui permet le déplacement dudit moteur de coupe (21) sur le coulisseau de déplacement (24),
√ un socle de machine (80) où ledit tuyau d'échantillon (40) sera placé afin d'être prêt à être coupé,
√ un système de serrage d'échantillon (50) qui est en prise avec le tuyau d'échantillon (40) placé sur la partie supérieure du socle de machine (80) en étant placé sous ledit socle de machine (80), permet la fixation du tuyau d'échantillon (40) sur le socle de machine (80),
• une mâchoire mobile (52) et une mâchoire fixe (53) qui composent ledit système de serrage d'échantillon (50), ce qui garantit la compression du tuyau d'échantillon (40) de sorte que le tuyau d'échantillon (40) reste sans se déplacer,
• un bras de mouvement (51) placé sous le socle de machine (80) qui permet la compression du tuyau d'échantillon (40) en déplaçant ladite mâchoire mobile (52),
√ un système de serrage d'échantillon supérieur (70) permet le serrage dudit tuyau d'échantillon (40) par le haut afin de le maintenir sans se déplacer après le placement dudit tuyau d'échantillon (40) sur le socle de machine (80),
√ un panneau de commande (60), qui fournit une commande automatique desdits éléments mobiles,
√ un corps principal (10) qui porte l'unité de coupe (20), l'élément d'entraînement d'unité de coupe (11) et le panneau de commande (60) sur lui.

2. Machine de coupe de tuyau d'échantillon (1) selon la revendication 1, **caractérisée en ce qu'elle comprend** un couvercle de boîtier avant télescopique (23), qui est placé sur l'avant de ladite lame de coupe (22) et protège la lame et empêche les accidents de travail.

3. Machine de coupe de tuyau d'échantillon (1) selon la revendication 1, **caractérisée en ce qu'elle comprend** un couvercle de boîtier fixe (27) qui empêche les accidents de travail en fermant les parties latérales et arrière de ladite lame de coupe (22).

4. Machine de coupe de tuyau d'échantillon (1) selon la revendication 3, **caractérisée en ce qu'elle comprend** un système de pulvérisation d'eau (28), qui est placé à l'intérieur dudit couvercle de boîtier fixe (27) et empêche la formation de poussière en pulvérisant de l'eau sur la zone de coupe pendant la coupe.

5. Machine de coupe de tuyau d'échantillon (1) selon la revendication 1, **caractérisée en ce qu'elle comprend** un interrupteur de sécurité supérieur (25), qui est fixé à la partie supérieure dudit corps principal (10), avec lequel le moteur de coupe (21) entrera en contact lorsque le moteur de coupe (21) sortira par le haut, et permettant ainsi l'arrêt de la machine.

6. Machine de coupe de tuyau d'échantillon (1) selon la revendication 1, **caractérisée en ce qu'elle comprend** un interrupteur de sécurité inférieur (26), qui est fixé à la partie inférieure dudit corps principal (10), avec lequel le moteur de coupe (21) sera en contact lorsque le moteur de coupe (21) descendra vers le bas, arrêtant ainsi la coupe et permettant le déplacement du moteur de coupe (21) vers le haut.

7. Machine de coupe de tuyau d'échantillon (1) selon la revendication 1, **caractérisée en ce qu'elle comprend** un couvercle de boîtier latéral (30) placé sur le socle de machine (80) de manière à entourer le tuyau d'échantillon (40) placé sur ledit socle de machine (80), qui se ferme pendant la coupe et empêche une intervention extérieure.

8. Machine de coupe de tuyau d'échantillon (1) selon la revendication 7, **caractérisée en ce qu'elle comprend** un interrupteur de sécurité de couvercle de boîtier latéral (31) qui garantit que le système fonctionne ou non en détectant si ledit couvercle de boîtier latéral (30) est ouvert ou fermé.
